# EUROPEAN PATENT APPLICATION

(11) **EP 2 469 862 A2**
(43) Date of publication of application: **27.06.2012**
(21) Application number: 10810076.9
(22) Date of filing: 11.06.2010
(51) Int. Cl.: H04N 13/00

(54) **IMAGE PROCESSING DEVICE AND METHOD**

(30) Priority: 19.08.2009 KR 20090076901; 06.05.2010 KR 20100042644
(71) Applicant: Electronics and Telecommunications Research Institute, Daejeon 305-700 (KR)
(72) Inventor: LEE, Bong Ho, Daejeon 305-700 (KR); YUN, Kug Jin, Daejeon 305-700 (KR); LEE, Hyun, Daejeon 305-700 (KR); LEE, Gwang Soon, Daejeon 305-700 (KR); HUR, Nam Ho, Daejeon 305-700 (KR); KIM, Jin Woong, Daejeon 305-700 (KR); LEE, Soo In, Daejeon 305-700 (KR); KIM, Yong Han, Seongnam-si Gyeonggi-do 463-050 (KR)
(74) Representative: Betten & Resch
(86) International application number: PCT/KR2010/003757
(87) International publication number: WO 2011/021768

(57) **Abstract**

Each of data of two viewpoints, constituting a stereoscopic video, may be received at predetermined time intervals. When first viewpoint video data is received among the data of the two viewpoint, a storage unit of an image processing apparatus may generate a monoscopic video using the received first viewpoint video data. The first viewpoint video data may be stored. When second viewpoint video data corresponding to the first viewpoint video data is received, the stereoscopic video may be generated by mixing the first viewpoint video data with the second viewpoint video data, and thereby be displayed.

## Description

### Technical Field

The present invention relates to an image processing apparatus and method, and more particularly, to an image processing apparatus and method that may generate and display a stereoscopic video using reference data and additional data that are transmitted in non-real time.

### Bagkground Art

A stereoscopic video service using video data observed from viewpoint of a left eye and a right eye may provide a three-dimensional (3D) image and thereby enables a viewer to experience increased realism.

Currently, attempts are being made to apply the stereoscopic video service to a terrestrial Digital Multimedia Broadcasting (DMB). Here, the stereoscopic video service needs to provide all the images observed from the left eye and the right eye and thus, may need to transmit two folds of data compared to a monoscopic video service.

Accordingly, it may be difficult to stably transmit stereoscopic video data in real time at a limited data rate, which makes it difficult to provide the stereoscopic video service to the terrestrial DMB.

Accordingly, there is a desire for a method that may decrease a transmission capacity of video data and also provide a stereoscopic video service.

### Disclosure of Intention

### Technical Goals

An aspect of the present invention provides an image processing apparatus and method that may generate a non-real-time stereoscopic video by mixing a plurality of viewpoint video data constituting a stereoscopic video when the plurality of viewpoint video data is transmitted at predetermined time intervals.

Another aspect of the present invention also provides an image professing apparatus and method that may generate a stereoscopic video by identifying corresponding video data and by mixing left viewpoint video data and right viewpoint video data constituting a stereoscopic video when the left viewpoint video data and the right viewpoint video data are alternately received at predetermined time intervals.

### Technical solutions

According to an aspect of the present invention, there is provided an image processing apparatus, including: a storage unit to store first viewpoint video data; an identification unit to determine whether the first viewpoint video data is stored in the storage unit when second viewpoint video data is received, the first viewpoint video data constituting a stereoscopic video in correspondence to the second viewpoint video data; and a processor to generate the stereoscopic video by mixing the first viewpoint video data and the second viewpoint video data when the first viewpoint video data is stored in the storage unit.

When the first viewpoint video data is not stored in the storage unit, the processor may generate a monoscopic video using the second viewpoint video data.

The first viewpoint video data and the second viewpoint video data may include identification data for identifying a content. The identification unit may extract the identification data from the second viewpoint video data, and may determine whether the first viewpoint video data is stored in the storage unit, based on the extracted identification data, and the first viewpoint video data constitute the stereoscopic video in correspondence to the second viewpoint video data.

The first viewpoint video data and the second viewpoint video data may be alternately and repeatedly received at predetermined time intervals.

The processor may synchronizes the first viewpoint video data and the second viewpoint video data by referring to a first marker and a second marker, the first marker indicates a start location for video synchronization within the first viewpoint video data and the second marker indicates a start location within the second viewpoint video data.

According to another aspect of the present invention, there is provided an image processing method, including: storing first viewpoint video data; determining whether the first viewpoint video data is stored in a storage unit when second viewpoint video data is received, the first viewpoint video data constituting a stereoscopic video in correspondence to the second viewpoint video data; and generating the stereoscopic video by mixing the first viewpoint video data and the second viewpoint video data when the first viewpoint video data is stored in the storage unit.

The image recessing method may further include generating a monoscopic video using the second viewpoint video data when the first viewpoint video data is not stored in the storage unit.

### Advantageous Effect

According to embodiments of the present invention, since a size of transmission data for generating a stereoscopic video may be reduced, it is possible to overcome constraints on a data rate.

Also, according to embodiments of the present invention, it is possible to prevent a quality degradation of a stereoscopic video by performing synchronization between different viewpoints of video data transmitted at predetermined time intervals.

### Brief Description of Drawings

FIG. 1 is a block diagram illustrating an image processing apparatus according to an embodiment of the present invention;
FIG. 2 is a diagram illustrating a process of generating a stereoscopic video by receiving and storing first viewpoint video data in advance, and by mixing the stored first viewpoint video data with subsequently received second viewpoint video data according to an embodiment of the present invention;
FIG. 3 is a diagram illustrating a process of generating a stereoscopic video by mixing first viewpoint video data and second viewpoint video data when the first viewpoint video data and the second viewpoint video data are alternately and repeatedly transmitted according to an embodiment of the present invention;
FIG. 4 is a diagram illustrating a process of employing an image processing method to a digital broadcasting according to an embodiment of the present invention; and
FIG. 5 is a flowchart illustrating an image processing method according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

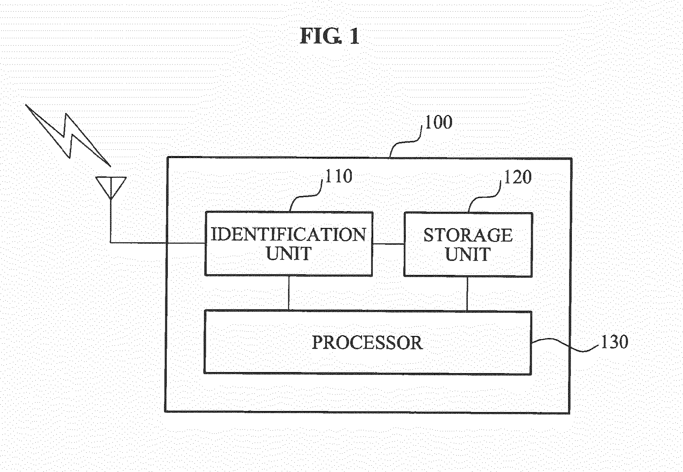

FIG. 1 is a block diagram illustrating an image processing apparatus 100 according to an embodiment of the present invention.

The image processing apparatus 100 may generate a stereoscopic video and/or a monoscopic video from a transmitted video stream , and thereby provide the stereoscopic video and/or the monoscopic video.

The stereoscopic video corresponds to a three-dimensional (3D) video that is generated using video data of two viewpoint corresponding to a left eye view and a right eye view.

Various schemes of transferring the stereoscopic video to a left eye and a right eye of a human being have been proposed, for example, a scheme of spreading an image to provide a view angle of 180 degrees based on a screen using the screen of a lenticular lens scheme.

The above scheme corresponds to a display scheme of refracting a left image and a right image through the lenticular screen where lenticular lenses are vertically arranged to thereby transmit different images to the left eye and the right eye of the human being.

In addition, a variety of schemes, for example, an active shutter lens scheme and the like have been introduced or commercialized. Hereinafter, even though various schemes of transferring the stereoscopic video to the left eye and the right eye of the human being and thereby providing a 3D video service are not described in detail, they may not be restrictively understood by a portion of embodiments of the present invention.

According to an embodiment of the present invention, between first viewpoint video data and second viewpoint video data constituting a stereoscopic video, the first viewpoint video data may be received.

The first viewpoint video data and the second viewpoint video data may be contained within a digital video stream and thereby be transmitted and be received.

The first viewpoint video data may correspond to left viewpoint video data of the stereoscopic video, and second viewpoint video data may correspond to right viewpoint video data of the stereoscopic video.

The received first viewpoint video data may be stored in a storage unit 120. The storage unit 120 corresponds to a medium that may store and maintain the first viewpoint video data for a predetermined period of time. For example, the storage unit 120 may be a volatile memory, a non-volatile memory, and the like.

For example, the storage unit 120 may be configured by a flash memory such as a NAND type, a NOR type, and the like, a hard disk, a Solid State Disk (SSD), and the like. However, they are only examples and thus, the present invention is not limited thereto or restricted thereby.

An identification unit 110 may determine whether second viewpoint video data is stored in the storage unit 120. Here, the second viewpoint video data indicates different viewpoint video data corresponding to the same content as the first viewpoint video data.

When the second viewpoint video data is determined to be stored in the storage unit 120, a processor 130 may generate the stereoscopic video using the first viewpoint video data and the second viewpoint video data.

Conversely, when the second viewpoint video data corresponding to the first viewpoint video data is determined to not be stored in the storage unit 120, the processor 130 may generate and display a monoscopic video,

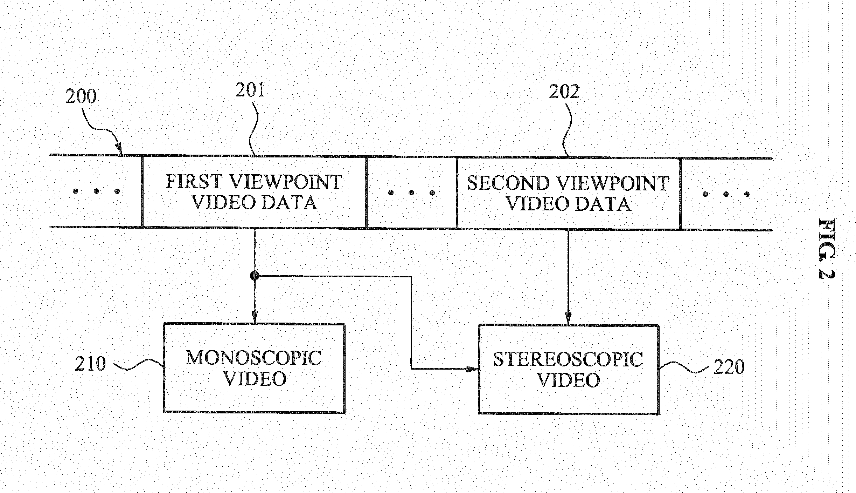

The above process will be further described with reference to FIG. 2 through FIG. 4.

FIG. 2 is a diagram illustrating a process of generating a stereoscopic video by receiving and storing first viewpoint video data in advance, and by mixing the stored first viewpoint video data with subsequently received second viewpoint video data according to an embodiment of the present invention.

Referring to FIG. 2, a video stream 200 indicates a set of video data for various contents.

The video stream 200 may be, for example, broadcasting video data transmitted by a digital broadcasting system.

For example, the video stream 200 may be broadcasting video data transmitted by a digital broadcasting system.

The video stream 200 may be transmitted via any of a wired channel and a radio channel. Accordingly, the present invention is not limited to a predetermined transmission scheme of the video stream 200, a predetermined usage scheme of the video stream 200, or a predetermined service type.

Each of video data including first viewpoint video data 201 and second viewpoint video data 202 for transferring various contents within the video stream 200 may include an identifier capable of identifying a content identity.

The identifier may be included in, for example, a scripter performing a functionality of metadata of video data. However, the term "identifier" does not indicate particular metadata and thus, may be interpreted as any type of data that may identify a content identify and the like.

When the first viewpoint video data 201 of the video stream 200 is received, the identification unit 110 may determine whether the second viewpoint video data 202 having the same identifier as the first viewpoint video data 201 and of which a viewpoint is different from a first viewpoint is already stored in the storage unit 120.

When the second viewpoint video data 202 having the same identifier is not stored in the storage unit 120, the professor 130 may generate and display a monoscopic video 210 using the first viewpoint video data 201.

To provide a stereoscopic video service in real time, maximum two folds of video data may need to be transmitted compared to a case where a monoscopic video service is provided. However, it may be undesirable in a limited bandwidth.

Therefore, according to an embodiment of the present invention, lett-viewpoint video data and right viewpoint video data constituting a stereoscopic video may be separately transmitted at predetermined time intervals. Hereinafter, one of the left viewpoint video data and the right viewpoint video data may be referred to as the first viewpoint video data 201, and another thereof may be referred to as the second viewpoint video data 202.

When contents repeatedly transmitted within the video stream 200 are configured as a stereoscopic video, the left viewpoint video data and the right viewpoint video data may be alternately and repeatedly transmitted.

In this case, the image processing apparatus 100 may provide the monoscopic video 210 using the first viewpoint video data 201 received between the left viewpoint video data and the right viewpoint video data, and may store the first viewpoint video data 201 in the storage unit 120.

When the identification unit 110 receiving the video data of the video stream 200 receives the second viewpoint video data 202, the identification unit 110 may compere an identifier of the existing stored first viewpoint video data 201 with an identifier of the second viewpoint video data 202, and thereby determine whether the first viewpoint video data 201 and the second viewpoint video data 202 corresponds to data constituting a stereoscopic video 220 corresponding to the same content.

When the first viewpoint video data 201 corresponding to the same content as the second viewpoint video data 202 is determined to be stored in the storage unit 120, the processor 130 may generate the stereoscopic video 220 by mixing the first viewpoint video data 201 and the second viewpoint video data 202.

During the above mixing process, synchronization may need to be performed between the first viewpoint video data 201 pre-stored in the storage unit 120 and the currently received second viewpoint video data 202. The synchronization may be performer using a marker portion for video synchronization. The marker portion may be included in each of the first viewpoint video data 201 and the second viewpoint video data 202.

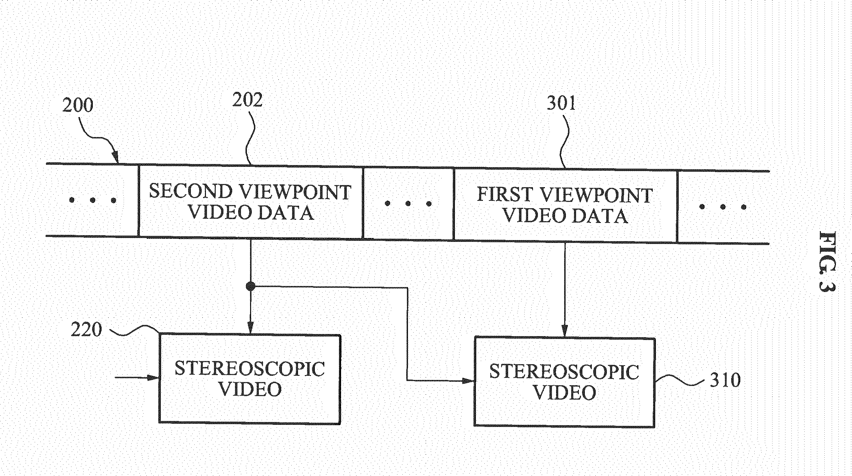

FIG. 3 is a diagram illustrating a process of generating a stereoscopic video by mixing first viewpoint video data 301 and second viewpoint video data 202 when the first viewpoint video data 301 and the second viewpoint video data 202 are alternately and repeatedly transmitted according to an embodiment of the present invention.

As described above, the video stream 200 may include left-viewpoint video data and right viewpoint video data alternately received at predetermined time intervals with respect to the same contend.

For example, when the first viewpoint video data 201 of FIG. 2 corresponds to left viewpoint video data of a first stereoscopic video content, the second viewpoint video data 202 that is right viewpoint video data of the same first stereoscopic video content may be subsequently transmitted. Next, first viewpoint video data 301 that is the left viewpoint video data of the first stereoscopic video content may be transmitted again.

Due to the above transmission scheme, even though the image recessing apparatus 100 receives video data from a predetermined point in time, when a predetermined period of time is elapsed, the image processing apparatus 100 may receive the left viewpoint video data and the right viewpoint video data of the first stereoscopic video content. Accordingly, the image professing apparatus 100 may generate and display a stereoscopic video 310.

According to another embodiment of the present invention, although not illustrated in figures, third viewpoint video data with respect to the first stereoscopic video content may be received instead of the first viewpoint video data 301.

In this example, another viewpoint stereoscopic video may be generated, which is different from an example of generating a stereoscopic video by mixing first viewpoint video data and second viewpoint video data.

Accordingly, the present invention may be applicable to an example of transmitting and displaying a multi-viewpoint video content as well as a stereoscopic video. However, it is only an example and thus, the present invention is not limited thereto.

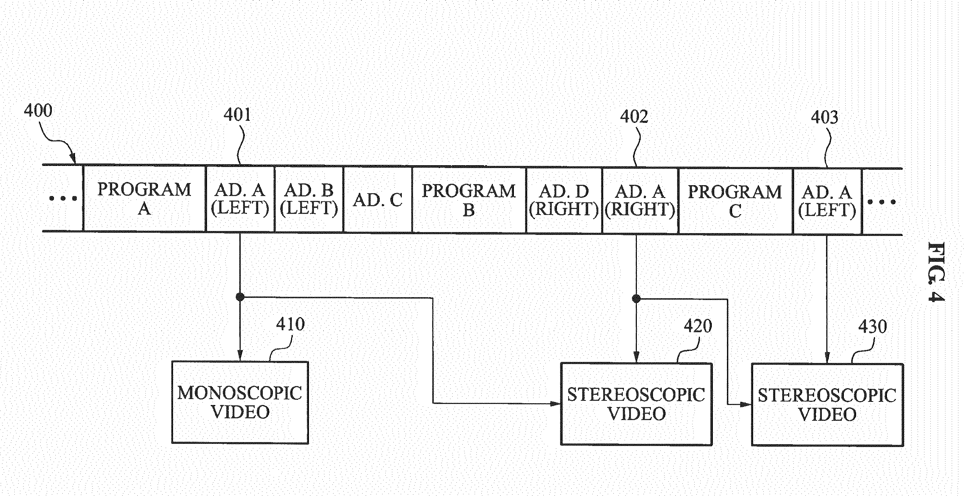

FIG. 4 is a diagram illustrating a process of employing an image processing method to a digital broadcasting according to an embodiment of the present invention.

The digital broadcasting may be, for example, a terrestrial digital broadcasting, a terrestrial DMB, and the like.

A video stream 400 may sequentially include digital broadcasting data.

Advertisement contents may be inserted between programs A, B, C, and the like, that are broadcasting programs provided from a broadcasting company.

The advertisement contents may be repeatedly provide between the programs.

Accordingly the video stream 400 may sequentially include left viewpoint video data 401 of an advertisement A, right viewpoint video data 402 of the advertisement A, left viewpoint video point video data 403 of the advertisement A, and the like, at predetermined time intervals. Here, the advertisement A may be configured as a stereoscopic video.

When the image processing apparatus 100 starts receiving the video stream 400 and thereby receives the left viewpoint video data 401 of the advertisement A, the identification unit 110 may determine whether right viewpoint video data of the advertisement A corresponding to the left viewpoint video data 401 of the advertisement A is stored in the storage unit 120.

Here, the determination may be made using an identifier for identifying the same contend, and the like.

When the right viewpoint video data of the advertisement A is determined to not be stored in the storage unit 120, the processor 130 may generate and display a monoscopic video 410 using the left viewpoint video data 401 of the advertisement A.

In this case, the left viewpoint video data 401 of the advertisement A may be stored in the storage unit 120. A storage expire date may be variously set, and may be differently adjusted according to a capacity of the storage unit 120, a characteristic of the video stream 400, and the like.

Referring to FIG. 4, left viewpoint video data of an advertisement B may be followed by the left viewpoint video data 401 of the advertisement A. Through the above determination process, the left viewpoint video data of the advertisement B may also be generated as a monoscopic video and thereby be displayed.

Similarly, the left viewpoint video data of the advertisement B may be stored in the storage unit 120.

In the case of video data of an advertisement C received as monoscopic video data, instead of one viewpoint video data of a stereoscopic video, the video data of the advertisement C may be simply generated as a monoscopic video and thereby be displayed. The video data of the advertisement C may not be stored in the storage unit 120. The programs may be the same.

When the right viewpoint video data 402 of the advertisement A in the video stream 400 is received, the identification unit 110 may compare corresponding identifiers and determine whether the left viewpoint video data 401 of the advertisement A is pre-stored in the storage unit 120.

In FIG. 4, since the left viewpoint video data 401 of the advertisement A is stored in the storage unit 120, the processor 130 may generate and display a stereoscopic video 420 by mixing the pre-stored left viewpoint video data 401 of the advertisement A with the right viewpoint video data 402 of the advertisement A.

The synchronization process of the stereoscopic video 420 may be performed by the processor 130 using a marker.

In this case, the storage unit 120 may store the right viewpoint video data 402 of the advertisement A, instead of the left viewpoint video data 401 of the advertisement A.

When the left viewpoint video data 403 of the advertisement A in the video stream 400 is received, a stereoscopic video 430 may be generated and thereby be displayed though the above process.

In an operation of the image processing apparatus 100, monoscopic video data included within the video stream 400 may be processed through a conventional decoding and displaying process of a digital video content.

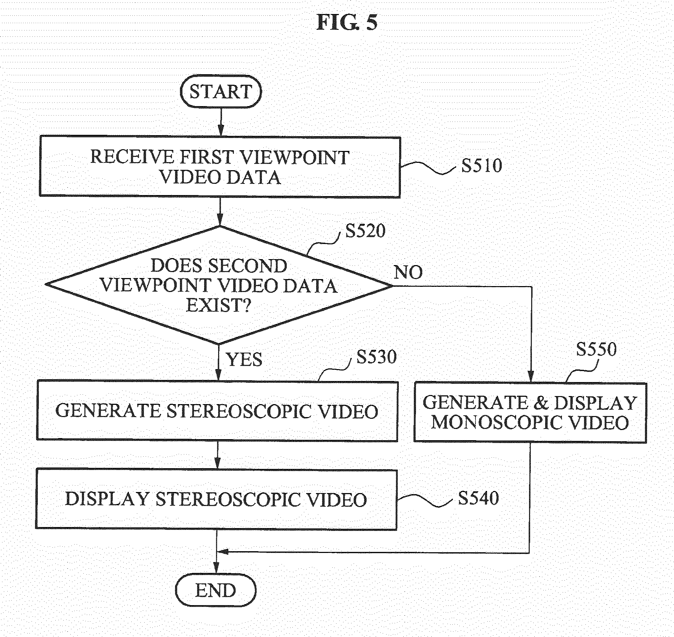

FIG. 5 is a flowchart illustrating an image processing method according to an embodiment of the present invention.

In operation S510, between first viewpoint video data and second viewpoint video data constituting a stereoscopic video, the first viewpoint video data may be received.

The first viewpoint video data may correspond to left viewpoint video data of the stereoscopic video, and second viewpoint video data may correspond to right viewpoint video data of the stereoscopic video.

In this case, the first viewpoint video data may be stored in the storage unit 120 of FIG 1.

In operation S520, an identification unit 110 may determine whether second viewpoint video data is stored in the storage unit 120. Here, the second viewpoint video data indicates different viewpoint video data corresponding to the same content as the first viewpoint video data.

When the second viewpoint video data is determined to be stored in the storage unit 120, the processor 130 may generate the stereoscopic video using the first viewpoint video data and the second viewpoint video data in operation S530.

In operation S540, the generated stereoscopic video may be displayed.

Conversely, when the second viewpoint video data corresponding to the first viewpoint video data is determined to not be stored in the storage unit 120, the processor 130 may generate and display a monoscopic video in operation S550.

Descriptions not made above with reference to FIG. 5 may refer to descriptions made above with reference to FIG. 2 through FIG. 4.

The above-described exemplary embodiments of the present invention may be recorded in computer-readable media including program instructions to implement various operations embodied by a computer. The media may also include, alone or in combination with the program instructions, data files, data structures, and the like. Examples of program instructions include both machine code, such as produced by a compiler, and files containing higher level code that may be executed by the computer using an interpreted.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. An image processing apparatus, comprising:
a storage unit to store first viewpoint video data;
an identification unit to determine whether the first viewpoint video data is stored in the storage unit when second viewpoint video data is received, the first viewpoint video data constituting a stereoscopic video in correspondence to the second viewpoint video data; and
a processor to generate the stereoscopic video by mixing the first viewpoint video data and the second viewpoint video data when the first viewpoint video data is stored in the storage unit.

2. The image processing apparatus of claim 1, wherein when the first viewpoint video data is not stored in the storage unit, the processor generates a monoscopic video using the second viewpoint video data.

3. The image processing apparatus of claim 1, wherein:
the first viewpoint video data and the second viewpoint video data comprises identification data for identifying a content, and
the identification unit extracts the identification data from the second viewpoint video data, and determines whether the first viewpoint video data is stored in the storage unit, based on the extracted identification data, and the first viewpoint video data constitutes the stereoscopic video in correspondence to the second viewpoint video data.

4. The image processing apparatus of claim 1, wherein the first viewpoint video data and the second viewpoint video data are alternately and repeatedly received at predetermined time intervals.

5. The image processing apparatus of claim 1, wherein the processor synchronizes the first viewpoint video data and the second viewpoint video data by referring to a first marker and a second marker, the first marker indicates a start location for video synchronization within the first viewpoint video data and the second marker indicates a start location within the second viewpoint video data.

6. An image processing method, comprising:
storing first viewpoint video data;
determining whether the first viewpoint video data is stored in a storage unit when second viewpoint video data is received, the first viewpoint video data constituting a stereoscopic video in correspondence to the second viewpoint video data; and
generating the stereoscopic video by mixing the first viewpoint video data and the second viewpoint video data when the first viewpoint video data is stored in the storage unit.

7. The method of claim 6, further comprising:
generating a monoscopic video using the second viewpoint video data when the first viewpoint video data is not stored in the storage unit.

8. The method of claim 7, wherein the generating comprises synchronizing the first viewpoint video data and the second viewpoint video data by referring to a first marker and a second marker, the first marker indicates a start location for video synchronization within the first viewpoint video data and the second marker indicates a start location within the second viewpoint video data.
